(19) Europäisches Patentamt

European Patent Office

Office européen des brevets

(11) Veröffentlichungsnummer: **0 247 535 B1**

(12) **EUROPÄISCHE PATENTSCHRIFT**

(45) Veröffentlichungstag der Patentschrift: **16.09.92**

(21) Anmeldenummer: **87107463.9**

(22) Anmeldetag: **22.05.87**

(51) Int. Cl.⁵: **G01N 27/30**

(54) **Referenzelektrode für die Ionenaktivitätsmessung, insbesondere für die pH-Wertmessung.**

(30) Priorität: **23.05.86 DE 3617479**
**14.02.87 DE 3704714**

(43) Veröffentlichungstag der Anmeldung:
**02.12.87 Patentblatt 87/49**

(45) Bekanntmachung des Hinweises auf die
Patenterteilung:
**16.09.92 Patentblatt 92/38**

(84) Benannte Vertragsstaaten:
**AT BE CH DE ES FR GB IT LI NL SE**

(56) Entgegenhaltungen:
**EP-A- 0 100 988**
**DE-A- 3 228 647**
**GB-A- 2 166 553**
**US-A- 3 662 745**
**US-A- 4 589 418**

(73) Patentinhaber: **AMAGRUSS LIMITED**
**Unit 4, Industrial Estate**
**Castlebar County Mayo(IE)**

(72) Erfinder: **Russel, Thimoty H.**
**Zur Jägersmühle 18**
**W-6918 Helmstadt-Bargen 1(DE)**
Erfinder: **Haaf, Dieter**
**Hauptstrasse 26**
**W-6924 Neckarbischofsheim(DE)**

(74) Vertreter: **Betten & Resch**
**Reichenbachstrasse 19**
**W-8000 München 5(DE)**

EP 0 247 535 B1

## Beschreibung

Die Erfindung bezieht sich auf eine Referenzelektrode für eine Messkette zur Messung der Ionenaktivität, wie zum Beispiel des pH-Wertes, gemäß dem Oberbegriff des Patentanspruchs 1.

Für elektrochemische Potentialmessungen wie zum Beispiel die pH-Wertmessung, wird eine Messelektrode, die auf die zu messenden Ionen anspricht und eine Referenzelektrode vorgesehen. Beide Elektroden tauchen in das zu messende Medium ein. Durch ein Messgerät (mV-Meter,pH-Meter) wird die Potentialdifferenz zwischen den beiden Elektroden gemessen. Die Messwertanzeige ist dabei ein Maß für die Ionenkonzentration. Bei der Wasserstoffionenaktivitätsmessung (pH-Wertmessung), bei der eine Messelektrode verwendet wird, die auf Wasserstoffionen anspricht, was bedeutet, daß deren Potential gegenüber der Referenzelektrode von der Wasserstoffionenkonzentration abhängig, das Potential der Referenzelektrode aber unabhängig konstant ist, wird in der Regel ein pH-Wertmessgerät verwendet. Das pH-Wertmessgerät ist dabei ein mV-Messgerät, das in pH-Werten geeicht ist. Die Aufgabe der Referenzelektrode besteht darin, unabhängig von dem Zustand und der Art des zu messenden Mediums in einem ionenleitenden Kontakt über das zu messende Medium zur Messelektrode zu stehen und ein von der Ionenkonzentration unabhängiges konstantes Eigenpotential aufzuweisen. Eine solche Referenzelektrode ist z.B. aus der DE-OS 30 36 354 bekannt. Bei dieser bekannten Referenzelektrode ist eine unten offenen Kammer mit einer Ummantelung aus Glas vorgesehen. Das untere offene Ende ist durch einen porösen Stopfen verschlossen, welcher einen ionenleitenden Kontakt über das zu messende Medium zur Messelektrode gewahrleistet, wobei die Kammer mit einer gesättigten, wässrigen Lösung aus Kaliumchlorid und Silberchlorid gefüllt ist. Innerhalb der Kammer, von der Chloridlösung umgeben, befindet sich ein galvanisch chlorierter Silberdraht oder Silberplatte, der oder die mit einem Verbindungskabel zum Messgerät angeschlossen ist.

Eine solche Anordnung ist nicht nur aufwendig in der Herstellung, sondern weist auch folgende Nachteile auf:
Durch den porösen Stopfen (Diaphragma) austretendes Kaliumchlorid und Silberchlorid können chemische Reaktionen mit dem zu messenden Medium auftreten, die das Diaphragma verstopfen und den ionenleitenden Kontakt unterbrechen können.

Diese bekannte Anordnung ist nur durch eine aufwendige Druckausgleichsarmatur druckbeständig um eine Diffusion des zu messenden Mediums ins Innere der Elektrode zu vermeiden, durch die die Betriebssicherheit beeinträchtigt werden kann.

Der Elektolytvorrat innerhalb der Kammer verringert sich durch Ausfluß während des Messvorgangs durch das Diaphragma. Ein Nachfüllen ist unerläßlich.

Diese bekannte Anordnung ist nur bedingt temperaturbeständig.

Bei einer weiteren, aus der DE-A 32 28 647 bekannten Referenzelektrode ist als Bezugselement ein Glasrohr vorgesehen, dessen eines Ende mit einem Stopfen verschlossen ist, und das mit einem Elektrolyten, in welchen ein Draht hineinragt, gefüllt ist. Das Glasrohr des Bezugselementes ist von einer aus einem porösen Werkstoff bestehenden Umhüllung umgeben, in deren Poren sich eine Flüssigkeitslösung befindet. Die Umhüllung ist von einem Rohr umgeben, das mehrere Öffnungen aufweist, durch welche der Kontakt zwischen dem zu prüfenden Medium und der Flüssigkeitslösung in den Poren der Umhüllung und von dieser zu dem Elektrolyten des Bezugselementes hergestellt wird. Diese Referenzelektrode ist nur bedingt temperaturbeständig. Es lässt sich bei ihr nicht vermeiden, daß die erwähnten Öffnungen im äusseren Rohr unter bestimmten Umständen durch Verschmutzungen allmählich zugesetzt werden, womit die Funktionsfähigkeit der Elektrode stark eingeschränkt wird. Eine Reinigung der Öffnungen im tragenden Rohr bereitet erhebliche Schwierigkeiten.

Es ist daher die Aufgabe der Erfindung, eine Referenzelektrode zu schaffen, die einfach im Aufbau ist, eine höhere Betriebssicherheit und eine größere Kontaktfläche mit dem zu prüfenden Medium als bei bekannten Elektroden aufweist.

Die Lösung der gestellten Aufgabe ist erfindungsgemäß dadurch gekennzeichnet, daß das Polymer des Werkstoffes der Umhüllung aus Polyvinylesther, Polypropylen, Polyvinilchlorid oder Epoxyharz mit einem Zusatz an kristallinem Kaliumchlorid oder einem anderen elektrisch leitenden Zusatz besteht und die gesamte Oberfläche der Umhullung frei zugänglich ist. Das Polymer wird noch vor dem Aushärtungsprozeß bzw. der Polymerisation mit dem leitenden Zusatz gemischt.

Eine Messkette mit der erfindungsgemäßen Elektrode weist eine weitere, für sich bekannte Messelektrode auf, wie diese z.B. aus der DE-AS 23 56 719 bekannt ist. Zwischen der Referenzelektrode und der Meßelektrode ist ein Meßgerät (mV-Meter,pH-Meter) mit hohem Eingangswiderstand angeschlossen. Die Skala des Meßgerätes ist in mV oder pH-Werten geeicht.

Eine Meßkette mit der erfindungsgemäßen Elektrode weist eine weitere für sich bekannte, getrennte Messelektrode auf. Diese Messkette kann als Einstabmesskette oder als Zweistabmesskette ausgeführt sein. Die Referenzelektrode und die Meßelektrode sind dabei an ein Meßgerät (mV-Meßgerät, pH-Meßgerät) angeschlossen, dessen Skala in mV oder pH-Werten geeicht ist.

Die erfindungsgemäße Referenzelektrode eignet sich für die Ionenaktivitätsmessung allgemein. Sie ist geeignet, wie beschrieben für die Messung der Wasserstoffionenaktivität (pH-Wert), als auch für beliebig andere Anionen wie Kationen unter Verwendung der dafür geeigneten Meßelektroden, die hier nicht näher beschrieben werden sollen. Außerdem ist dabei die Wahl des leitenden Zusatzes im Polymer von Bedeutung, denn eine Auswaschung durch das zu messende Medium des leitenden Zusatzes in Form von Salzen läßt sich nicht vermeiden, wodurch die Messung beeinflußt werden kann. Es empfiehlt sich deshalb als leitender Zusatz für die Messung von z.B. Chlor-, Brom-, Jod-, Silber-, Quecksilber-, Kalium- und Cyanationen als leitender Zusatz Kaliumnitrat bzw. Natriumnitrat.

Es zeigen die

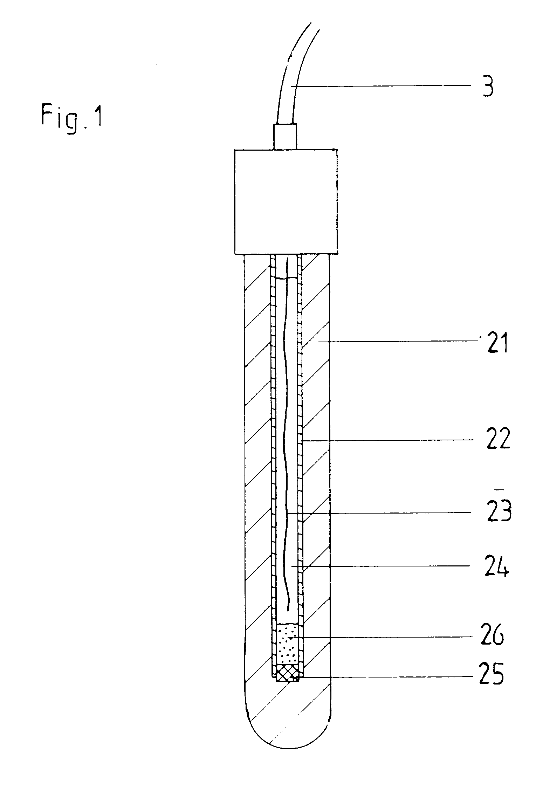

Fig. 1    eine Referenzelektrode nach der Erfindung in einem Längsschnitt,

Fig. 2    eine Zweistabmeßkette für die pH-Wertmessung mit der erfindungsgemäßen Referenzelektrode,

Fig. 3    eine Einstabmeßkette für die pH-Wertmessung mit der erfindungsgemäßen Referenzelektrode,

Die Proportionen der einzelnen Bauelemente in den Zeichnungen entsprechen nicht den wirklichen Verhältnissen, um eine gute Erkennbarkeit zu ermöglichen.

In den Zeichnungen ist mit 2 die Referenzelektrode, mit 22 ein Glasrohr derselben, und mit 21 der aus leitendem Kunststoff bestehende Mantel, der das Glasrohr konzentrisch umgibt, bezeichnet. Das Glasrohr 22 ist an seinem unteren Ende durch einen aus poröser Keramik bestehenden Stopfen 25 verschlossen. Im Glasrohr 22 ist ein Elektrolyt 24 enthalten, sowie ein Vorrat an pulverisiertem Silberchlorid 26, um eine Sättigung des aus Kaliumchlorid und Silberchlorid bestehenden wässrigen Elektrolyten 24 zu gewährleisten. In diesen Elektrolyten taucht der galvanisch chlorierte Silberdraht 23 und stellt den elektrischen Kontakt zum Verbindungskabel 3 her.

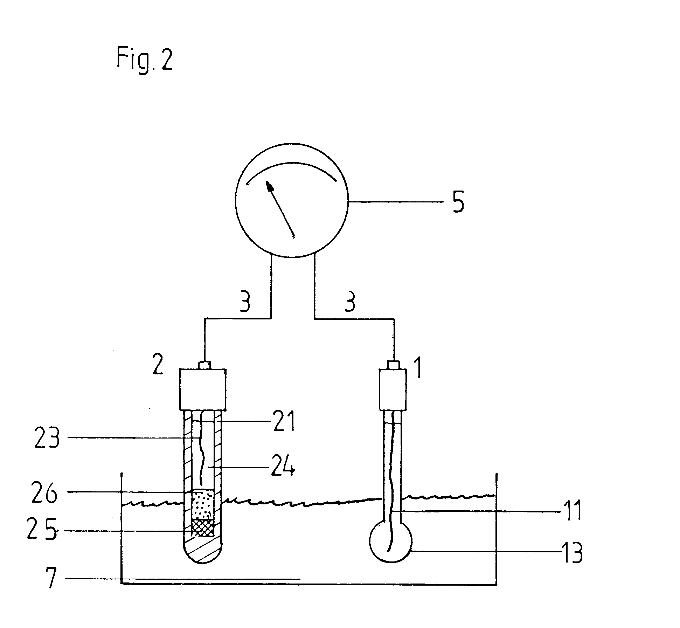

Bei der in Fig. 2 dargestellten Zweistabmeßkette ist außer der Referenzelektrode 2 eine Meßelektrode 1 vorgesehen, die beide in das Meßmedium 7 eintauchen. Die Meßelektrode 1 weist ein Glasrohr 10 auf, dessen unteres kugelförmiges Teil 13 aus elektrisch leitendem Glas besteht und das auf die zu messenden Wasserstoffionen anspricht. Das Glasrohr 10 ist mit einem Elektrolyten gefüllt, in welchem sich ein ebenfalls galvanisch chlorierter Silberdraht 11 befindet, der wie der galvanisch chlorierte Silberdraht 23 über Verbindungskabel 3 an das Meßgerät 5 angeschlossen ist, dessen Skala in mV/pH-Werten geeicht ist.

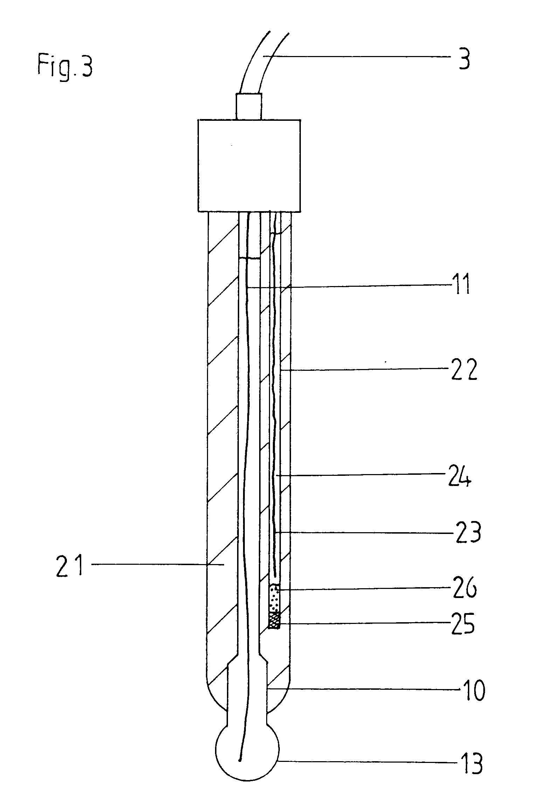

Bei der in Fig. 3 dargestellten Einstabmeßkette mit einer Referenzelektrode 2 nach der Erfindung ist wiederum mit 10 das Glasrohr der Meßelektrode, mit 13 sein kugelförmiges Teil aus elektrisch leitendem Glas, und mit 11 der galvanisch chlorierte Silberdraht bezeichnet, der in den Elektrolyten eintaucht, der in das Glasrohr 10 gefüllt ist und mit dem Verbindungskabel 3 zum Meßgerät angeschlossen ist. Das Glasrohr 10 ist von einem aus leitendem Kunststoff bestehenden Mantel 21 umgeben. Innerhalb des Mantels 21 ist das Glasrohr 22 angeordnet. Der chlorierte Silberdraht 23 ist ebenfalls über Verbindungskabel 3 zum Meßgerät angeschlossen.

## Patentansprüche

1.   Referenzelektrode für eine Ionenaktivitätsmeßkette, insbesondere für die pH-Wertmessung, mit einem Glasrohr (22), dessen unteres Ende durch einen Stopfen (25) verschlossen ist, mit einem wässrigen Elektrolyten (24) gefüllt ist und ein in diesen Elektrolyten (24) eintauchendes, chloriertes Silberelement (23) wie insbesondere Draht, Drahtgeflecht oder Platte aufweist, das mit einem Verbindungskabel (3) verbunden ist, wobei das Rohr (22) von einer Umhüllung aus einem elektrochemisch neutralen Werkstoff umgeben ist, welcher aus einem Polymer besteht,
dadurch gekennzeichnet,
daß das Polymer des Werkstoffes der Umhüllung aus Polyvinylester, Polypropylen, Polyvinylchlorid oder Epoxydharz mit einem Zusatz an kristallinem Kaliumchlorid oder einem anderen elektrisch leitenden Zusatz besteht und die gesamte Oberfläche der Umhüllung frei zugänglich ist.

2.   Elektrode nach Anspruch 1 dadurch gekennzeichnet, daß als leitender Zusatz Kaliumchlorid, Lithiumchlorid, Kaliumnitrat, Natriumnitrat oder ein anderes Salz vorgesehen ist.

3.   Elektrode nach Anspruch 1, dadurch gekennzeichnet, daß als Elektrolyt im Glasrohr (22) eine gesättigte, wässrige Lösung von Kaliumchlorid und Silberchlorid mit einer Einlage (26) aus pulverisiertem Silberchlorid vorgesehen ist.

4.   Elektrode nach Anspruch 1, dadurch gekennzeichnet, daß das in den Elektrolyten (24) eintauchende Silberelement galvanisch chloriert ist.

5.   Elektrode nach Anspruch 1, dadurch gekennzeichnet, daß der Stopfen (25) aus poröser Keramik besteht.

6. Anwendung einer Referenzelektrode nach einem der Ansprüche 1 bis 5 bei einer Messkette zur Ionenaktivitätsmessung, wobei zwischen der Referenzelektrode (2) und einer für sich bekannten Messelektrode (1) ein Messgerät (5) mit hohem Eingangswiderstand, bestehend aus Messverstärker, Messwertanzeige und einer Potentiometerschaltung zur Eichung der Messkette, bestehend aus Referenzelektrode (2) und Messelektrode (1), über Verbindungskabel (3) angeschlossen ist.

7. Anwendung nach Anspruch 6, dadurch gekennzeichnet, daß die Skala der Messwertanzeige des Messgerätes für die Ionenaktivitätsmessung allgemein in mV geeicht ist.

8. Anwendung nach Anspruch 6, dadurch gekennzeichnet, daß die Skala der Messwertanzeige des Messgerätes bei der pH-Messung in pH-Werten geeicht ist.

9. Anwendung einer Referenzelektrode nach einem der Ansprüche 1 bis 5 bei einer Einstabmesskette für die pH -Wertmessung mit einer Meßelektrode, welche einen galvanisch chlorierten Silberdraht (11) aufweist, der in einem oben und unten verschlossenem Glasrohr (10), in welchem sich ein Elektrolyt befindet, angeordnet ist, wobei der unterste kugelförmige Teil (13) elektrisch leitend ist und wobei als Referenzelektrode (2) ein das Glasrohr (10) umfassender, aus einem elektrisch leitenden Kunststoff bestehender Mantel (21) vorgesehen ist, in welchem sich das Glasrohr (22) befindet. (Fig.3)

## Claims

1. Reference electrode for an ion-activity measuring assembly, in particular for pH measurement, having a glass tube (22) whose lower end is closed by means of a plug (25), is filled with an aqueous electrolyte (24) and has a chlorinated silver element (23), such as particularly wire, wire mesh or plate, immersed in this electrolyte (24), and connected to a connecting cable (3), the tube (22) being covered by a sheathing of an electro-chemically neutral material consisting of a polymer, characterised in that the polymer of the material of the sheathing consists of polyvinyl ester, polypropylene, polyvinyl chloride or epoxy resin with an addition of crystalline potassium chloride or another electrically conductive additive and the entire surface of the sheathing is freely accessible.

2. Electrode according to Claim 1, characterised in that potassium chloride, lithium chloride, potassium nitrate, sodium nitrate or another salt is provided as conductive additive.

3. Electrode according to Claim 1, characterised in that a saturated aqueous solution of potassium chloride and silver chloride with a layer (26) of pulverised silver chloride is provided as electrolyte in the glass tube (22).

4. Electrode according to Claim 1, characterised in that the silver element immersed in the electrolyte (24) is galvanically chlorinated.

5. Electrode according to Claim 1, characterised in that the plug (25) consists of porous ceramic.

6. Use of a reference electrode according to any of Claims 1-5 in a measuring assembly for measuring ion-activity, in which, between the reference electrode (2) and a measuring electrode (1) known as such, a measuring instrument (5) with a high input impedance, consisting of a measuring amplifier, a measured value display and a potentiometer circuit for calibrating the measuring assembly, which consists of the reference electrode (2) and the measuring electrode (1), is connected via a connecting cable (3).

7. Use according to Claim 6, characterised in that the scale of the measured value display of the measuring instrument for measuring ion activity is generally calibrated in mV.

8. Use according to Claim 6, characterised in that the scale of the measured value display of the measuring instrument for the pH measurement is calibrated in pH values.

9. Use of a reference electrode according to any of Claims 1-5 in a single rod measuring assembly for pH measurement with a measuring electrode which has a galvanically chlorinated silver wire (11) which is located in a glass tube (10) sealed at the top and at the bottom, in which tube an electrolyte is present, the lowest ball-shaped part 13 being electrically conductive and a sheathing (21), consisting of an electrically conductive plastics, which surrounds the glass tube (10) and in which the glass tube (22) is present, being provided as reference electrode (2). (Fig. 3).

**Revendications**

1. Electrode de référence pour une chaîne de mesure de l'activité ionique, notamment pour la mesure des valeurs de pH, qui comporte un tube de verre (22), dont l'extrémité inférieure est obturée par un bouchon (25) et qui est rempli d'un électrolyte aqueux (24), un élément (23) en argent chloré se présentant, notamment, sous la forme d'un fil, d'une tresse ou d'une plaque étant immergé dans ledit électrolyte et relié à un câble de jonction (3), le tube (22) étant mis en place dans une enveloppe en un matériau électrochimiquement neutre, constitué par un polymère, caractérisée en ce que le polymère du matériau de l'enveloppe est un ester de polyvinyl, du polypropylène, du chlorure de polyvinyle ou une résine époxy contenant une charge de chlorure de potassium cristallisé ou toute autre charge conductrice de l'électricité et en ce que l'ensemble de la surface de l'enveloppe est libre d'accès.

2. Electrode selon la revendication 1, caractérisée en ce que la charge conductrice d'électricité est du chlorure de potassium, du chlorure de lithium, du nitrate de potassium, du nitrate de sodium ou un autre sel.

3. Electrode selon la revendication 1, caractérisée en ce que l'électrolyte contenu dans le tube de verte (22) est une solution aqueuse saturée de chlorure de potassium et de chlorure d'argent en présence d'un dépôt (26) de chlorure d'argent en poudre.

4. Electrode selon la revendication 1, caractérisée en ce que l'élément en argent immergé dans l'électrolyte (24) est galvanique chloré.

5. Electrode selon la revendication 1, caractérisée en ce que le bouchon (25) est en une céramique poreuse.

6. Utilisation d'une électrode de référence selon l'une des revendications 1 à 5, dans une chaîne de mesure destinée à la mesure de l'activité ionique et comportant, entre l'électrode de référence (2) et une électrode de mesure en elle-même connue (1), un appareil de mesure (5) présentant une résistance propre élevée, composé d'un amplificateur de signal, d'un indicateur de mesure et d'un potentiomètre pour l'étalonnage de la chaîne de mesure, qui se compose d'une électrode de référence (2) et d'une électrode de mesure (1), reliées à l'aide d'un câble de jonction.

7. Utilisation selon la revendication 6, caractérisée en ce que l'échelle des valeurs de mesure de l'appareil de mesure de l'activité ionique est, de façon usuelle, graduée en mV.

8. Utilisation selon la revendication 6, caractérisée en ce que l'échelle des valeurs de mesure de l'appareil de mesure des valeurs de pH, est graduée en unités de pH.

9. Utilisation d'une électrode de référence selon l'une des revendications 1 à 5, dans une chaîne de mesure monoélément pour la détermination des valeurs de pH, avec une électrode de mesure, qui comporte un fil d'argent galvanique chloré (11), mis en place dans un tube en verte (10) fermé à ses extrémités supérieure et inférieure et contenant un électrolyte, l'extrémité inférieure (13) du tube étant sphérique et conductrice de l'électricité et, en tant qu'électrode de référence (2), le tube de verre (22), disposé à l'intérieur de l'enveloppe (21), en matière synthétique conductrice de l'électricité, qui reçoit, également, le tube de verre (10).

Fig.1

3

21

22

23

24

26

25

Fig. 2

Fig.3